# EUROPEAN PATENT SPECIFICATION

(11) **EP 2 909 008 B1**
(45) Date of publication and mention of the grant of the patent: **11.04.2018**
(21) Application number: 12887148.0
(22) Date of filing: 22.10.2012
(51) Int. Cl.: B29C 70/08, B64C 1/00, B64C 3/20, B29C 65/50, B29C 70/14, B32B 5/28, B64C 3/26, B29C 70/24, B29L 31/30, B29K 105/12, B32B 5/02, B29C 65/48

(54) **INTEGRAL ATTACHMENT OF FIBER REINFORCED PLASTIC RIB TO FIBER REINFORCED PLASTIC SKIN FOR AIRCRAFT AIRFOILS**
INTEGRIERTE BEFESTIGUNG AUS EINER FASERVERSTÄRKTEN KUNSTSTOFFRIPPE AN EINE FASERVERSTÄRKTE KUNSTSTOFFHAUT FÜR FLUGZEUGFLÜGEL
FIXATION INTÉGRÉE DE MONTANT EN PLASTIQUE RENFORCÉ DE FIBRES À UN REVÊTEMENT EN PLASTIQUE RENFORCÉ DE FIBRES POUR AILES PORTANTES D'AVION

(43) Date of publication of application: 26.08.2015
(73) Proprietor: SAAB AB, 581 88 Linköping (SE)
(72) Inventor: RYDBOM, Anders, S-583 32 Linköping (SE)
(74) Representative: Zacco Sweden AB
(86) International application number: PCT/SE2012/051127
(87) International publication number: WO 2014/065719

(56) References cited:
- EP-A1- 2 189 277
- EP-A1- 2 189 277
- EP-A2- 0 970 800
- WO-A1-03/031159
- WO-A1-2010/144009
- WO-A2-2007/136755
- WO-A2-2009/014788
- WO-A2-2012/136660
- US-A- 4 206 895
- US-A- 4 206 895
- US-A- 5 667 859
- US-A- 5 735 486
- US-A- 5 876 540
- US-A- 5 876 540
- US-A1- 2004 023 581
- US-A1- 2009 117 363

## Description

### TECHNICAL FIELD

The present invention relates to a torsion-box type airfoil structure according to the preamble of claim1.

The invention relates to the aircraft industry and to aircraft maintenance engineering. The invention is not limited thereto, but can be used also in automotive engineering, trains, wind power blades etc.

### BACKGROUND ART

Current technology of lightweight airfoils is based on mechanically fastening, bonding or co-curing of carbon fiber reinforced plastic (CFRP) materials in laminate form. Manufacturing process of parts and components can be either in- or out-of autoclave curing of preimpregnated CFRP, or resin injection of dry fibers. In particular, rib feet are normally fastened to composite skins using mechanical fasteners to carry the peel loads.

The attachment of a composite rib (e.g. wing rib) to a composite skin in a torsion-box type airfoil structure (e.g. a wing, horizontal or vertical stabilizer, control surface etc.) results in significant peel loads between the rib and the skin, especially when rib feet are not connected to the stringers. Such peel loads exhibit an inter-laminar load in the co-cured laminate and/or bond line, which requires the introduction of mechanical fasteners. However, in certain cases, for example when laminar flow is desired, such fasteners have a negative effect on the airflow causing turbulence and drag.

A joint between composite and thermoplastic components is known from WO 2008/110835. The method described herein discloses the use of an array of Titanium projection profiles joining the components to each other.

US 2009/0140098 discloses the application of carbon nano tubes in a resin matrix for achieving high conductivity of the component.

WO 2010/144009 discloses an aircraft structure having structural parts bonded to each other via a bonding interlayer material comprising carbon nano tubes for eliminating the use of mechanical fasteners between skin and spars. The technique disclosed in WO 2010/144009 is now subject for development and it is an object to provide a torsion-box type airfoil structure, wherein the structure being formed by joined together structural composite parts made of fiber reinforced plies stacked onto each other, with improved interlaminar and intralaminar strength and stiffness at the same time as the structure can be efficient produced and is of reasonable cost and is of low weight.

US 5 735 486 describes a wing structure having a wing skin and a stringer assembly. It describes bundles of unidirectional fibres, which extend in the longitudinal direction of the wing and are arranged between the stringers,

EP 2 189 277 discloses a spar joint attached to a skin. The spar joint has a laminar foot print area and secondary fibres introduced in an interface produced by a carrier ply.

US 5 876 540 discloses prefabricated composite detail parts that are joined to each other by means of stubble-like elements connecting the parts together.

US 4 206 895 discloses means for strengthening joints in bonded structural assemblies formed of two composite parts by using strands or threads in loop stitching.

There is also an object to provide the composite skin outer surface with a smooth aerodynamic surface.

There is also an object to reduce the number of various materials of the structure for efficient manufacture.

### SUMMARY OF THE INVENTION

This has been achieved by the structure defined in the introduction and being characterized by the features of the characterizing part of claim 1.

In such way a torsion-box type airfoil structure is achieved which has high strength and low weight. Saving weight means that also fuel is saved. No bolts or other mechanical fastening elements have to be used for strengthening the attachment between the skin and the rib feet, which also means that fuel can be saved as laminar airflow over the aerodynamic surface of the skin can be reached. An efficient production is also achieved, since no additional materials have to be added in the production. Due to increased strength in peel between rib feet and composite skin, as an alternative, no additional shear load attachment brackets between the stringers and rib feet have to be provided.

Suitably, the first structural part is a composite rib foot and the second structural part is a composite airfoil skin.

In such way efficient aircraft manufacture can be achieved in view of cost-effective production of wings, stabilizers, control surfaces etc.

Preferably, a third structural part is a composite stringer being joined to the composite airfoil skin by embedding a plurality of elongated reinforcement fiber-like elements in the parts within the joint region.

In such way efficient aircraft manufacture can be achieved in view of cost-effective production of wings, stabilizers, control surfaces etc. An ATL (automatic tape laying) apparatus can be used for providing the airfoil skin lay-up and the lay-up is arranged for comprising fibrous mats protruding from the lay-up surface within areas corresponding to the joint regions for joining the stringers to the joint regions.

Suitably, the elongated reinforcement fiber-like elements constitute a fibrous interface between the parts.

Thereby efficient aircraft manufacture can be achieved in view of logistics regarding handling of i.e. carbon fibers and carbon nano tubes (used for improving the strength between the rib feet and the skin and/or the stringers and the skin). Thereby these elongated reinforcement fiber-like elements can be used also for other applications within the aircraft manufacture, which is cost-effective.

Preferably, the elongated reinforcement fiber-like elements are three dimensional carbon fiber fabrics, wherein third dimensional carbon fibers extend into said parts.

In such way is achieved that 3D-engineered CFRP materials can be used for permitting a design and fabrication of torsion-box type wing structures without the need for mechanical fasteners attaching the rib feet to the wing skin, also in the case when the rib feet are not connected to the stringers. The use of these materials, separately or in combination, will allow high strength of the structure at the same time as efficient production is achieved. These materials also provide improved interlaminar (interface between parts) and intralaminar (interface between laminate plies within the laminate per se) strength and stiffness. A structural design, e.g. a wing composite skin panel with integral composite stringers and composite rib feet, where the rib feet are not connected to the stringers, can thereby be used efficiently allowing co-curing or bonding of the rib feet to the skin panel without the use of mechanical fasteners.

Suitably, the elongated reinforcement fiber-like elements comprise aligned transverse or random oriented carbon nano tubes arranged in-between said plies and in said plies.

In such way improved intralaminar strength and stiffness can be achieved in a cost-effective way.

The composite material used to form the ribs, skin and stringers may be of unidirectional pre-impregnated composite material. Alternatively, the material used can be pre-impregnated woven fabric. Alternatively, the material used can be dry woven fabric, in a second step injected or impregnated with resin. Alternatively, the material used can be dry woven fabric interleaved with resin film.

Suitably, the transverse oriented reinforcement structure comprises CNTs (carbon nano tubes), which are grown in radial direction directly on individual large carbon fibers. The transverse oriented fibers may be three dimensional carbon fiber fabrics (tailor made three dimensional fabrics and arrangement of stitched fabric assemblies to be adapted to the actual design). Laminate materials may be based on pre-preg tape such as unidirectional pre-impregnated fiber plies, fibers being of woven carbon fiber pre-preg fabrics, Kevlar, spectra pre-preg tapes and fabrics etc.

Preferably, also nano fibers, nano wires or other nano element structures can be used.

The application of transverse oriented nano elements relative the skin surface can be achieved in different ways. For example, growth of nano tubes onto large fibers, which large fibers extends in the plane of the skin. In such case, some of the nano filaments are oriented transverse. Other examples may include a skin having all elongated nano elements oriented transverse the skin surface within the joint region.

Preferably, the elongated reinforcement fiber-like elements exhibit through-thickness reinforcement with extension partly or entirely through one, more than one or all plies of the structural composite parts within the joint region.

Suitably, the composite skin comprises at least two plies with aligned transverse oriented carbon nano tubes being positioned between the plies for strengthening the joint between the plies in a transverse direction relative the ply plane and within the joint region. Suitably, the three-dimensional-engineered fiber material can include aligned transverse oriented carbon nano tubes or nano wires in-between the plies for further improvement of the peel strength.

Preferably, the nano-sized elongated reinforcement fiber-like elements (CNT, nano fibre, nano multi wall filament, nano double wall filament, nano wire etc.) has a length of 0,1 mm up to 3,0 mm for achieving improved strength between rib foot and skin. This is suitable for a common pre-preg ply having a thickness of 0,125 mm used in the production of aircrafts. If leaning (relative laminate plane) nano-sized elongated reinforcement fiber-like elements are used, the length preferably can be longer. The definition of nano is an element having at least one dimension not more than 200 nm. 1 nm (nanometre) is defined as 10⁻⁹ metre (0,000 000 001 meter). Preferably, the diameter of a multiwall nano tube is 15-35 nm, suitably 18-22 nm. Suitably, the diameter of a single wall nano tube is 1,2-1,7 nm, preferably 1,35-1,45 nm.

In such way the strength within the joint region of the structure being achieved in a cost-effective way.

Alternatively, the elongated reinforcement fiber-like elements exhibit through-thickness reinforcement with extension through the at least on ply with a measurement of about from 10 µm to 10 mm, preferably 127 µm to 7 mm. Preferably, in case of using CNTs, the through-thickness reinforcement may have an extension up to 1,5 mm into the skin laminate and into the flange of the rib foot respectively.

Suitably, the inner surface of the skin is fixed to the stringers and rib feet via an adhesive comprising a nano element structure.

In such way is achieved an enhanced peel load absorbing functionality of the joint region. Alternatively, nano-engineered adhesives are provided for bonding of pre-cured spar segments (spars, spar caps etc.) to pre-cured or "wet" laid up skins or plies.

The joint (bond) between the skin inner surface and the rib feet, are preferably made with an adhesive comprising transverse oriented fibers.

### BRIEF DESCRIPTION OF THE DRAWINGS

The present invention will now be described by way of examples with references to the accompanying schematic drawings, of which:
Fig. 1 illustrates an aircraft comprising torsion-box type airfoil structures of composite;
Fig. 2 illustrates an airfoil structure comprising a composite skin, composite stringers, composite ribs;
Fig. 3 illustrates a rib foot attached to a skin and a rib;
Fig. 4 illustrates peel stresses due to compressive and tensile forces acting on the joint between rib foot and skin;
Fig. 5 illustrates an embodiment comprising cleats connecting the ribs to the stringers;
Figs. 6a-6g illustrate embedded elongated reinforcement fiber-like elements in the skin and rib foot according to further embodiments;
Figs. 7a-7b illustrate examples of torsion-box type airfoil structures where ribs are attached to skins; and
Fig. 8 illustrates the inner side of a wing skin with co-cured rib feet, their joints to the skin are strengthen by embedding a plurality of transverse oriented CNTs in the skin laminate within the joint regions.

### DETAILED DESCRIPTION

Hereinafter, embodiments of the present invention will be described in detail with reference to the accompanying drawings, wherein for the sake of clarity and understanding of the invention some details of no importance may be deleted from the drawings. Also, the illustrative drawings show fiber structures of different types, being illustrated extremely exaggerated and schematically for the understanding of the invention. The nano structures are illustrated exaggerated in the figures also for the sake of understanding of the orientation and the alignment of the nano elements. The number of plies of the skin laminate and of the rib foot laminate may be illustrated fewer for sake of clarity.

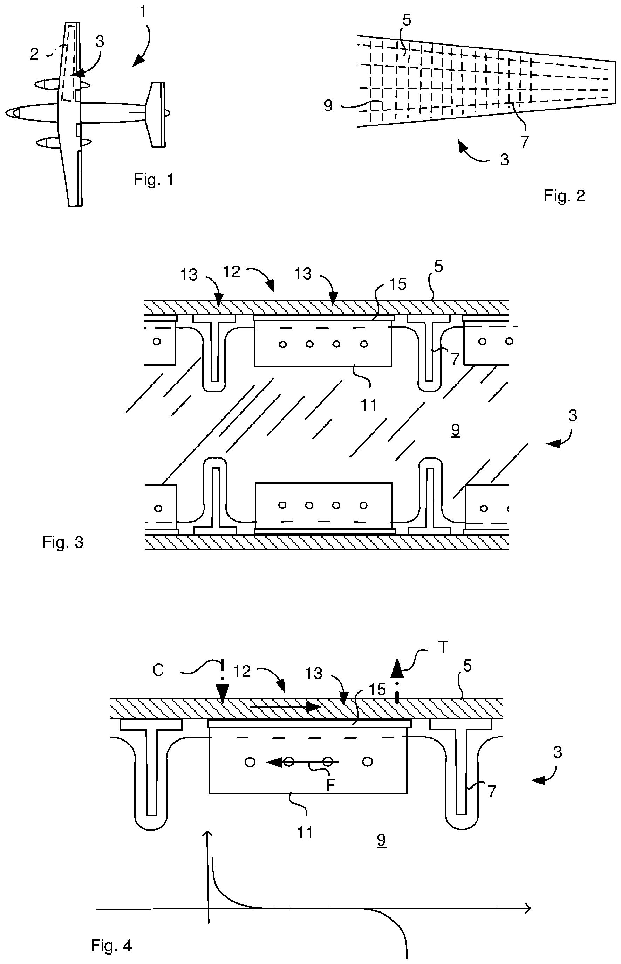

Fig. 1 schematically illustrates an aircraft 1 comprising torsion-box type airfoil structures 3 of composite laminates. A wing box 2 is marked with dotted line, which box comprises wing skin, stringers (not shown), ribs and rib feet, joined together as follows.

Fig. 2 schematically illustrates a torsion-box type airfoil structure 3 comprising a composite skin 5, composite stringers 7, composite ribs 9. The ribs 9 are connected to the inner side of the skin 5 via so called rib feet 11 (see Fig. 3).

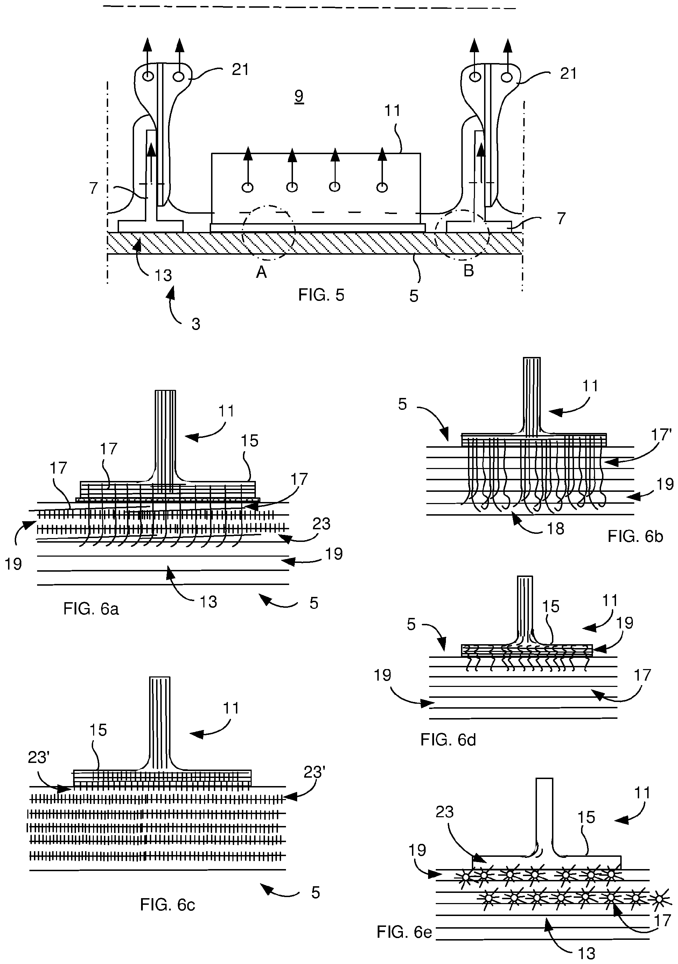

Fig. 3 schematically illustrates a section of the structure 3. A wing skin 5 made of composite laminate (fiber reinforced plastic) of the structure 3 comprises a smooth outer surface (aerodynamic surface) 12. A rib foot 11 is attached to the inner side of the wing skin 5 by means of co-curing the wing skin 5 and the rib feet 11. Also stringers 7 are co-cured at the same time in one production step. The joint 13 between the rib foot 11/stringers 7 and wing skin 5 is strengthened by means of 3D-engineered CFRP materials (see Fig. 6a) and the third dimension carbon fibres 17 extend (stitched fabric assembly) into the flanges 15 of the rib foot and into the uppermost plies of the wing skin 5 laminate. A wing rib 9 is mechanically fastened to the rib feet 11.

Fig. 4 schematically illustrates peel stresses present due to the balancing of the shear force F acting on the rib foot from the rib. The shear force has to be balanced by a load couple giving compressive C and tensile T forces acting on the joint 13 between rib foot 11 flanges 15 and skin 5 during use of the structure 3, since the rib foot is not rigidly connected to the stringers. The joint 13 in this embodiment comprises third dimension carbon fibres 17 oriented out of plane (transverse to plane) and extend orthogonally relative laminate plane partially through thickness of the skin 5 and further into the flanges 15 of the rib foot 11, as shown in Fig. 6d. The same type of carbon fibres (not shown) extend also in plane of the skin 5 plies 19.

Fig. 5 schematically illustrates an embodiment comprising cleats 21 connecting the ribs 9 to the stringers 7, wherein the cleats 21 alleviate rib foot 11 tension loading. I.e., the stringers 7 are rigidly joined to the skin 5 and a plurality of nano tubes is embedded in both in the stringers 7 and in the skin 5 laminate and in-between the skin and stringer laminate within the area of the joint 13 (not shown, but similar to the arrangement in Fig. 6c). Due to improved strength in the joints 13 between the skin 5 and stringers 7 (integral stringers 7) there is no need for connecting the rib feet 11 to the stringers 7 otherwise adding weight to the aircraft.

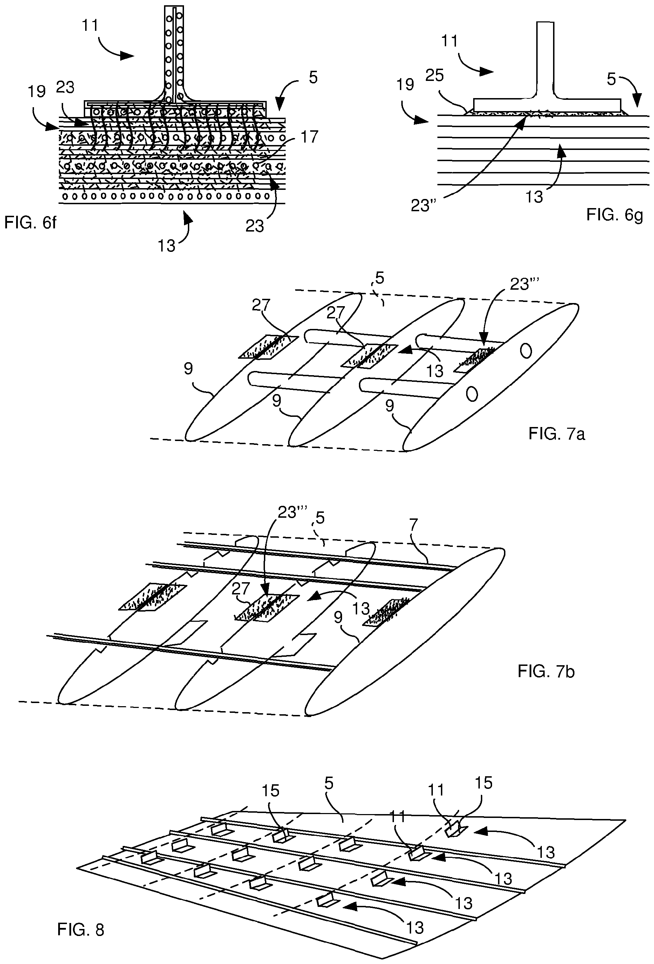

Figs. 6a-6g schematically illustrate embedded elongated reinforcement fiber-like elements in the skin 5 and rib foot 11 (section A in Fig. 5) and in the skin 5 and stringer 9 (section B in Fig. 5) according to different embodiments. Fig 6a illustrates carbon fibers 17, which extend transverse to the plane of the skin 5 laminate (through the laminate half the thickness) and extend through the flanges 15 of the rib foot 11. The extension through the flanges 15 is also transverse to the fiber reinforcement in plane. The joint 13 between the rib foot 11 and wing skin 5 is thus strengthened by means of 3D-engineered CFRP materials and the third dimension carbon fibres 17 are made of a stitched fabric assembly and extend into the flanges 15 of the rib foot 11 and into the uppermost plies 19 of the wing skin 5 laminate. The intralaminar strength is improved by adding carbon nano tubes 23 in-between the plies 19 of the skin 5. Fig. 6b shows an example with graphite fibers 17' formed with hooks 18 for proper anchor of the rib foot 11 to the skin 5. The fibers 17' extend through the entire thickness of the skin laminate. Fig. 6c shows a rib foot 11 and a skin 5 wherein is used carbon nano wires 23' for improving both interlaminar strength and intralaminar strength. Fig. 6d illustrates the elongated reinforcement fiber-like elements constituting 3-D carbon fiber fabrics, (in-plane arranged fibers are not show), wherein the third dimensional carbon fibers 17 extend into the flanges 15 of the rib foot 11 and through 20% of the thickness of the skin 5. Fig. 6e illustrates transverse oriented reinforcement elements comprising carbon nano tubes 23, which are grown in radial direction (some of them being transverse oriented relative the plane of the skin) directly on individual large carbon fibers 17 of the plies 19. Fig. 6f shows the elongated reinforcement fiber-like elements as random oriented carbon nano tubes 23 arranged in-between the plies 19 and in the plies 19. Carbon fibers 17 extend through the skin laminate 5 one third of the thickness. Fig. 6g illustrates a nano-engineered adhesive 25 which is adapted to bond a pre-cured rib foot 11 and a wet laid up skin 5. The adhesive 25 comprises random oriented carbon nano fibers 23". After curing, some of the carbon nano fibers 23" will be embedded in the rib foot 11 laminate and the skin laminate upper ply 19.

Figs. 7a-7b schematically illustrate examples of torsion-box type airfoil structures, where ribs 9 are attached to the airfoil skins 5 (broken lines). Fig. 7a illustrates the ribs 9 comprising flanges 27 of plastic comprising embedded carbon fibrous material 23"'. Some fibers protrude into the skin 5 within the joint region 13 for achieving improved strength. Fig. 7b illustrates an example where stringers 7 are attached to the skin 5 for adding strength to the skin 5.

Fig. 8 illustrates an inner side of a wing skin 5 with co-cured rib feet 11. The joints between fib feet 11 and the wing skin 5 are strengthen by embedding a plurality of transverse oriented CNTs (not shown) in the skin laminate and in the rib foot flange 15 laminate within the joint regions 13. Dotted lines illustrate the orientations of the wing ribs, which in a next step will be mounted to the rib feet 11.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. Examples of suitably composite materials include carbon fibers, aramid fibers, combinations of carbon, aramid fibers. The skins and other composite parts may be provided by laminating multiple sheets or layers having the fibers of respective sheet oriented in different directions. The extension of the fibers and/or nano elements can be through the entire laminate thickness or just a minor portion of the thickness near the surface contacting the rib foot. The extension can also be half the thickness, or 10-90%, preferably 30-70%, of the thickness. This may regard also the extension through the rib foot laminate and/or stringer laminate.

## Claims

1. A torsion-box type airfoil wing box structure, wherein the airfoil structure (3) is a wing box of an aircraft (1), wherein attachment of a wing rib (9) is made to a composite skin (5) of the structure (3), the structure (3) being formed by joined structural composite parts (5, 7, 9, 11) made of fiber reinforced plies (19) stacked onto each other, **characterized by that** at least a first (11) and a second structural part (5) being joined by embedding a plurality of elongated reinforcement fiber-like elements (17, 17', 23, 23', 23", 23'") in said first (11) and second (5) structural parts, wherein said fiber-like elements (17, 17', 23, 23', 23", 23"') connect said parts to each other, wherein the first structural part is a composite rib foot (11) and the second structural part is a composite airfoil skin (5), wherein the elongated reinforcement fiber-like elements (17, 17') constitute a fibrous interface between the composite rib foot (11) and the composite airfoil skin (5).

2. The structure according to claim 1, **wherein** a bond between the skin inner surface and the rib feet (11) being made with an adhesive comprising transverse oriented fibers.

3. The structure according to claim 1 or 2, **wherein** a third structural part is a composite stringer (7) being joined to the composite airfoil skin (5) by embedding a further plurality of elongated reinforcement fiber-like elements (17, 17', 23, 23', 23") in the parts (5, 7).

4. The structure according to any of the preceding claims, **wherein** the elongated reinforcement fiber-like elements (17, 17', 23, 23', 23") exhibit through-thickness reinforcement with extension partly or entirely through one, more than one or all plies (19) of the structural composite parts (5, 7, 9) within the joint region (13).

5. The structure according to any of the preceding claims, **wherein** the elongated reinforcement fiber-like elements comprise aligned transverse or random oriented carbon nano tubes (23) arranged in-between said plies (19) and in said plies (19).

6. The structure according to any of the preceding claims, **wherein** the elongated reinforcement fiber-like elements are aligned transverse oriented carbon nano tubes (23).

7. The structure according to any of the preceding claims, **wherein** the elongated reinforcement fiber-like elements (17, 17', 23, 23', 23") exhibit through-thickness reinforcement with extension through the at least on ply (19) of about from 10 µm to 10 mm, preferably 127 µm to 7 mm.

## Patentansprüche

1. Torsionsboxartiger Tragflächenkastenaufbau, wobei der Tragflächenaufbau (3) ein Flügelkasten eines Flugzeugs (1) ist, wobei die Anbringung eines Flügelspants (9) an einer Verbundaußenhaut (5) des Aufbaus (3) vorgenommen wird, wobei der Aufbau (3) durch verbundene strukturelle Verbundteile (5, 7, 9, 11) ausgebildet ist, die aus faserverstärkten Lagen (19) bestehen, die ineinander geschichtet sind,
**dadurch gekennzeichnet, dass**
wenigstens ein erstes (11) und ein zweites strukturelles Teil (5) durch Einbetten einer Vielzahl von länglichen faserartigen Verstärkungselementen (17, 17', 23, 23', 23", 23'") in dem ersten (11) und zweiten (5) strukturellen Teil verbunden sind, wobei die faserartigen Elemente (17, 17', 23, 23', 23", 23"') die Teile miteinander verbinden, wobei das erste strukturelle Teil ein Verbundspantfuß (11) und das zweite strukturelle Teil eine Verbundtragflächenhaut (5) ist, wobei die länglichen faserartigen Verstärkungselemente (17, 17') eine faserige Schnittstelle zwischen dem Verbundspantfuß (11) und der Verbundtragflächenhaut (5) bilden.

2. Aufbau nach Anspruch 1, **wobei** eine Bindung zwischen der inneren Oberfläche der Haut und dem Spantfuß (11) mit einem Klebstoff vorgenommen wird, der quer ausgerichtete Fasern umfasst.

3. Aufbau nach Anspruch 1 oder 2, **wobei** ein drittes strukturelles Teil eine Verbundwange (7) ist, die mit der Verbundtragflächenhaut (5) durch Einbetten einer weiteren Vielzahl von länglichen faserartigen Verstärkungselementen (17, 17', 23, 23', 23", 23'") in den Teilen (5, 7) verbunden ist.

4. Aufbau nach einem der vorhergehenden Ansprüche, **wobei** die länglichen faserartigen Verstärkungselemente (17, 17', 23, 23', 23", 23"') eine Verstärkung durch die Dicke mit einer Ausdehnung teilweise oder vollständig durch eine, mehr als eine oder alle Lagen (19) der strukturellen Verbundteile (5, 7, 9) in dem verbundenen Bereich (13) aufweisen.

5. Aufbau nach einem der vorhergehenden Ansprüche, **wobei** die länglichen faserartigen Verstärkungselemente fluchtende quer oder willkürlich ausgerichtete Kohlenstoffnanoröhren (23) umfassen, die zwischen den Lagen (19) und in den Lagen (19) angeordnet sind.

6. Aufbau nach einem der vorhergehenden Ansprüche, **wobei** die länglichen faserartigen Verstärkungselemente fluchtende quer ausgerichtete Kohlenstoffnanoröhren (23) sind.

7. Aufbau nach einem der vorhergehenden Ansprüche, wobei die länglichen faserartigen Verstärkungselemente (17, 17', 23, 23', 23", 23"') eine Verstärkung durch die Dicke mit einer Ausdehnung durch wenigstens eine Lage (19) von etwa von 10 µm bis 10 mm, vorzugsweise 127 µm bis 7 mm aufweisen.

## Revendications

1. Structure de caisson d'aile de surface portante de type caisson de torsion, dans laquelle la structure de surface portante (3) est un caisson d'aile d'un aéronef (1), dans laquelle la fixation d'une nervure d'aile (9) se fait à un revêtement composite (5) de la structure (3), la structure (3) étant formée par des parties composites structurelles (5, 7, 9, 11) jointes réalisées en plis renforcés de fibres (19) empilées les unes sur les autres, **caractérisée en ce qu'**au moins une première (11) et une deuxième partie structurelle (5) sont jointes en incorporant une pluralité d'éléments de type fibre de renforcement (17, 17', 23, 23', 23'', 23''') allongés dans lesdites première (11) et deuxième (5) parties structurelles, dans laquelle lesdits éléments de type fibre (17, 17', 23, 23', 23", 23''') relient lesdites parties les unes aux autres, dans laquelle la première partie structurelle est une patte de nervure composite (11) et la deuxième partie structurelle est un revêtement de surface portante composite (5), dans laquelle les éléments de type fibre de renforcement (17, 17') allongés constituent une interface fibreuse entre la patte de nervure composite (11) et le revêtement de surface portante composite (5).

2. Structure selon la revendication 1, dans laquelle une liaison entre la surface intérieure de revêtement et les pattes de nervure (11) étant réalisée avec un adhésif comprenant des fibres orientées transversalement.

3. Structure selon la revendication 1 ou 2, dans laquelle une troisième partie structurelle est une lisse composite (7) jointe au revêtement de surface portante composite (5) en incorporant une pluralité supplémentaire d'éléments de type fibre de renforcement (17, 17', 23, 23', 23") allongés dans les parties (5, 7).

4. Structure selon l'une quelconque des revendications précédentes, dans laquelle les éléments de type fibre de renforcement (17, 17', 23, 23', 23") allongés présentent un renforcement dans le sens de l'épaisseur avec une extension en partie ou en totalité à travers un, plus d'un ou tous les plis (19) des parties composites structurelles (5, 7, 9) au sein de la région de jonction (13).

5. Structure selon l'une quelconque des revendications précédentes, dans laquelle les éléments de type fibre de renforcement allongés comprennent des nanotubes de carbone (23) orientés aléatoirement ou transversalement et alignés, agencés entre lesdits plis (19) et dans lesdits plis (19).

6. Structure selon l'une quelconque des revendications précédentes, dans laquelle les éléments de type fibre de renforcement allongés sont des nanotubes de carbone (23) orientés transversalement et alignés.

7. Structure selon l'une quelconque des revendications précédentes, dans laquelle les éléments de type fibre de renforcement (17, 17', 23, 23', 23") allongés présentent un renforcement dans le sens de l'épaisseur avec une extension à travers l'au moins un pli (19) d'environ 10 µm à 10 mm, de préférence de 127 µm à 7 mm.
